# EUROPÄISCHE PATENTSCHRIFT

(11) **EP 3 548 719 B1**
(45) Veröffentlichungstag und Bekanntmachung des Hinweises auf die Patenterteilung: **23.06.2021**
(21) Anmeldenummer: 17807868.9
(22) Anmeldetag: 01.12.2017
(51) Int. Cl.: F01N 3/021, F01N 9/00, F01N 11/00

(54) **VERFAHREN UND ABGASANLAGE ZUR PRÜFUNG EINES BELADUNGSZUSTANDS EINES PARTIKELFILTERS**
METHOD AND EXHAUST SYSTEM FOR CHECKING A LOADING STATE OF A PARTICLE FILTER
PROCÉDÉ ET SYSTÈME D'ÉCHAPPEMENT PERMETTANT DE CONTRÔLER UN ÉTAT DE CHARGE D'UN FILTRE À PARTICULES

(30) Priorität: 05.12.2016 DE 102016123426
(43) Veröffentlichungstag der Anmeldung: 09.10.2019
(73) Patentinhaber: Volkswagen Aktiengesellschaft, 38440 Wolfsburg (DE)
(72) Erfinder: SUDSCHAJEW, David, 38527 Abbesbüttel (DE)
(74) Vertreter: Rössler, Matthias
(86) Internationale Anmeldenummer: PCT/EP2017/081092
(87) Internationale Veröffentlichungsnummer: WO 2018/104155

(56) Entgegenhaltungen:
- DE-A1-102013 201 734
- DE-A1-102013 218 900
- US-A1- 2005 188 681
- US-A1- 2011 219 746

## Beschreibung

Die Erfindung betrifft ein Verfahren und eine Abgasanlage zur Prüfung eines Beladungszustands eines Partikelfilters, wobei der Partikelfilter in einer Abgasleitung einer Verbrennungskraftmaschine angeordnet ist. Das Verfahren wird in einem Kraftfahrzeug durchgeführt.

Kraftfahrzeuge mit Partikelfiltern zum Herausfiltern bzw. Zurückhalten von Partikeln aus dem Abgas sind allgemein bekannt. Es ist weiter bekannt, dass solche Partikelfilter regelmäßig regeneriert werden müssen, wobei die Regeneration einen Abbau der Partikel in der Partikelfalle bewirkt.

Der Zeitpunkt einer erforderlichen Regeneration und die Wirksamkeit der durchgeführten Regeneration wird z. B. sensorisch ermittelt. Es ist bekannt, dafür Drucksensoren, Drucksensoranordnungen oder Druckdifferenzsensoren einzusetzen. Der Einsatz derartiger Sensoren ist jedoch sehr kostspielig, wobei diese Verfahren zudem nur sehr ungenaue Werte liefern.

Eine Modellierung der Partikelbeladung ist ebenfalls bekannt. Auch dieses Verfahren liefert jedoch nur Schätzwerte für den Zeitpunkt zur Durchführung einer Regeneration und für die Wirksamkeit der durchgeführten Regeneration.

Aus der US 2011/0219746 A1 ist ein Verfahren zur Regeneration eines Partikelfilters bekannt, wobei eine Lambdasonde stromaufwärts und eine weitere Lambdasonde stromabwärts eines Partikelfilters angeordnet sind.

Üblicherweise wird eine Verbrennungskraftmaschine mit einem stöchiometrischen Mischungsverhältnis von Kraftstoff und Sauerstoff betrieben. Ein (Rest )Sauerstoffüberschuss im Abgas, der durch einen Lambda-Wert größer 1,0 gekennzeichnet ist, weist auf einen Betrieb der Verbrennungskraftmaschine mit einem "mageren" Gemisch von Kraftstoff und Sauerstoff hin. Ein (Rest-)Sauerstoffmangel im Abgas, der durch einen Lambda-Wert kleiner 1,0 gekennzeichnet ist, weist auf einen Betrieb der Verbrennungskraftmaschine mit einem "fetten" Gemisch von Kraftstoff und Sauerstoff hin.

In der US 2011/0219746 A1 wird die Regeneration des Partikelfilters durch die Gemischbildung für die Verbrennungskraftmaschine geregelt, in dem der Sauerstoffgehalt im Abgas eingestellt wird. Für die Regeneration des Partikelfilters wird ein Sauerstoffüberschuss im Abgas stromaufwärts des Partikelfilters eingestellt, so dass im Partikelfilter eingelagerte Partikel, sofern eine Mindestabgastemperatur von mindestens ca. 500 Grad Celsius vorliegt, oxidativ umgesetzt werden. Die stromabwärts des Partikelfilters angeordnete Lambdasonde zeigt aufgrund der Umsetzung des Sauerstoffs in dem Partikelfilter eine fettere Mischung des Abgases an als die stromaufwärts des Partikelfilters angeordnete Lambdasonde. Der Unterschied der durch die Lambdasonden gemessenen Werte im Abgas wird als Hinweis auf die laufende Regeneration und die Umsetzung der eingelagerten Partikel angesehen. Aus dem Betrag des Unterschieds wird der Ablauf und die Wirksamkeit der Regeneration abgeleitet.

Die US 2005/0188681 A1 betrifft ein Verfahren zur Ermittlung einer Alterung eines Partikelfilters. Stromaufwärts und stromabwärts eines Partikelfilters sind Lambdasonden angeordnet.

Aufgabe der vorliegenden Erfindung ist es, die mit Bezug auf den Stand der Technik angeführten Probleme zumindest teilweise zu lösen. Insbesondere soll ein Verfahren und eine Abgasanlage zur Prüfung eines Beladungszustands eines Partikelfilters angegeben werden.

Zur Lösung dieser Aufgaben trägt ein Verfahren mit den Merkmalen gemäß Patentanspruch 1 und eine Abgasanlage gemäß Patentanspruch 6 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Prüfung eines Beladungszustands eines Partikelfilters in einer Abgasleitung einer Verbrennungskraftmaschine vorgeschlagen, wobei die Abgasleitung zumindest den Partikelfilter, eine stromaufwärts des Partikelfilters (in der Abgasleitung) angeordnete erste Lambda-Sonde sowie eine stromabwärts des Partikelfilters (in der Abgasleitung) angeordnete zweite Lambda-Sonde aufweist; wobei das Verfahren zumindest die folgenden Schritte umfasst:
a) Einleiten eines Abgases mit einem Sauerstoffüberschuss in die Abgasleitung stromaufwärts der ersten Lambda-Sonde, wobei in dem Partikelfilter eine Temperatur von mindestens 500 Grad Celsius vorliegt;
b) Erkennen des Sauerstoffüberschusses durch die erste Lambda-Sonde an einem ersten Zeitpunkt;
c) Erkennen des Sauerstoffüberschusses durch die zweite Lambda-Sonde an einem zweiten Zeitpunkt;
d) Bestimmen eines Beladungszustands des Partikelfilters aus einer zeitlichen Differenz des ersten Zeitpunkts und des zweiten Zeitpunkts.

Das Verfahren ist für alle Arten von Verbrennungskraftmaschinen (Otto-Motor, Diesel-Motor, etc.) einsetzbar.

Die Beladung eines Partikelfilters bezeichnet hier insbesondere die Menge bzw. Masse von Feststoffen (wie z. B. Rußpartikel), die im Partikelfilter aktuell gespeichert ist. Der Beladungszustand kann anhand vorgegebener Grenzwerte kategorisiert werden, die insbesondere unter Berücksichtigung der konstruktiven Ausgestaltung des Partikelfilters, des Abgassystems und/oder der Verbrennungskraftmaschine bzw. deren Betrieb angepasst und/oder variabel sein kann. Beispiele für Beladungszustände können sein: "leer", "unkritisch", "regenerationsfähig", "regenerationserforderlich", "voll" - wobei der vorgegebene Grenzwert bei dieser Reihenfolge steigt.

Ein Partikelfilter im vorliegenden Sinn betrifft insbesondere einen so genannten Wall-Flow-Filter, also ein Bauteil mit einer Vielzahl von Kanälen (z. B. nach Art einer Wabenstruktur), die insbesondere wechselseitig verschlossen sind und damit ein Durchdringen des Abgases mit den Feststoffen durch eine gaspermeable bzw. poröse Wand erfordern. Dabei werden die Feststoffe an bzw. in den Wänden abgeschieden und/oder zurückgehalten. Mit zunehmender Beladung setzen sich die Wände bzw. die Kanäle zu.

Das Verfahren wird durchgeführt, wenn in dem Partikelfilter eine ausreichend hohe Temperatur vorliegt, bei der eine oxidative Umsetzung von eingelagerten Partikeln erfolgen kann (üblicherweise über 500 Grad Celsius).

Gemäß Schritt a) wird ein Abgas mit einem Sauerstoffüberschuss (Lambda > 1,0) in die Abgasleitung stromaufwärts der ersten Lambda-Sonde eingeleitet, so dass dann gemäß Schritt b) die erste Lambda-Sonde die Änderung des Mischungsverhältnisses (von vorher "fett" auf nun "mager") erkennt und ein erstes Signal an einem ersten Zeitpunkt generiert.

Um sicherzustellen, dass die erste Lambda-Sonde den eingestellten Sauerstoffüberschuss erkennt, wird insbesondere (unmittelbar) vorher ein Abgas mit einem Sauerstoffmangel (Lambda < 1,0) in die Abgasleitung eingeleitet.

Das Abgas mit dem Sauerstoffüberschuss tritt stromabwärts der ersten Lambda-Sonde in den Partikelfilter ein, wobei innerhalb des Partikelfilters eine oxidative Umsetzung der eingelagerten Partikel erfolgt. Infolge der oxidativen Umsetzung wird die Menge des im Abgas enthaltenen, überschüssigen Sauerstoffs reduziert. Erst wenn die in dem Partikelfilter eingelagerten Partikel oxidativ umgesetzt wurden, wird Abgas mit Sauerstoffüberschuss auch stromabwärts des Partikelfilters auftreten. Erst dann wird der im Abgas eingestellte Sauerstoffüberschuss durch die zweite Lambda-Sonde erkannt (Schritt c)).

Stromabwärts des Partikelfilters wird also das in die Abgasleitung eingeleitete Abgas mit dem Sauerstoffüberschuss erst zeitverzögert auftreten. Die Verzögerung kann von der Menge/Masse des in den Partikelfilter einströmenden Sauerstoffüberschusses und/oder von dem Beladungszustand des Partikelfilters abhängen. Insbesondere hängt die Verzögerung auch von einer Sauerstoffspeicherfähigkeit des Partikelfilters oder eines Katalysators sowie von dessen Alterungszustand ab. Der im Abgas der Verbrennungskraftmaschine eingestellte Sauerstoffüberschuss ist bekannt, so dass aus der Verzögerung des Auftretens von Abgas mit Sauerstoffüberschuss an der zweiten Lambda-Sonde der Beladungszustand des Partikelfilters errechnet werden kann.

Das vorgeschlagene Verfahren nutzt folglich die zeitliche Differenz der Erfassung des eingestellten Sauerstoffüberschusses im Abgas zwischen der Messung an der ersten Lambda-Sonde und der Messung an der zweiten Lambda-Sonde.

Das Bestimmen eines Beladungszustands des Partikelfilters aus der zeitlichen Differenz des ersten Zeitpunkts und des zweiten Zeitpunkts kann insbesondere derart erfolgen, dass ein Beladungszustand in Abhängigkeit der ermittelten bzw. gemessenen zeitlichen Differenz zugewiesen wird. Liegt die zeitliche Differenz unterhalb eines ersten vorgebbaren Minimal-Grenzwertes, kann der Beladungszustand "leer" zugewiesen werden. Liegt die zeitliche Differenz unterhalb eines zweiten (und größeren) vorgebbaren Minimal-Grenzwertes, kann der Beladungszustand "unkritisch" zugewiesen werden, usw. Liegt die zeitliche Differenz oberhalb eines ersten vorgebbaren Maximal-Grenzwertes, kann der Beladungszustand "regenerationserforderlich" zugewiesen werden; Liegt die zeitliche Differenz oberhalb eines zweiten (und größeren) vorgebbaren Maximal-Grenzwertes, kann der Beladungszustand "voll" zugewiesen werden, usw. Selbstverständlich können den Grenzwerten auch Massen- oder Mengenbezogene Beladungszustände zugewiesen werden. Insbesondere kann anhand der zeitlichen Differenz eine konkrete Angabe der vorliegenden Beladung in Gramm bzw. Milligramm erfolgen. Es ist auch möglich, dass die Grenzwerte variabel vorgebbar sind. Die Anzahl bzw. Differenzierung der Beladungszustände kann an den Anwendungsfall angepasst sein.

Der so ermittelte Beladungszustand kann dafür eingesetzt werden, eine durchgeführte Regeneration (Entladung) des Partikelfilters zu überprüfen und/oder eine neue Regeneration auszulösen.

Insbesondere wird zumindest während der Durchführung der Schritte a), b) und c) der Betrieb der Verbrennungskraftmaschine durch eine Eigenfrequenz-Regelung der Lambda-Sonden geregelt, in dem eine Umschaltung zwischen dem Betrieb mit Sauerstoffüberschuss und einem Betrieb mit Sauerstoffmangel durch das Erkennen der sich ändernden Zusammensetzung des Abgases durch die zweite Lambda-Sonde erfolgt. Bevorzugt wird dabei eine sogenannte übersteuerte Eigenfrequenzregelung angewendet. Dabei erfolgt die Umschaltung des Betriebs der Verbrennungskraftmaschine nicht unmittelbar bei Erkennen der sich ändernden Zusammensetzung des Abgases durch die zweite Lambda-Sonde, sondern nach einer Totzeit. Insbesondere wird also für eine längere Zeit ein Betrieb mit Sauerstoffüberschuss durchgeführt, so dass eine Regeneration des Partikelfilters sichergestellt ist. Diese Totzeit beträgt z. B. ca. 1 Millisekunde und höchstens ca. 100 Millisekunden, kann aber in Abhängigkeit von der Größe des Partikelfilters, von dessen Alterungszustand usw. variieren. Mit zunehmenden Alter des Partikelfilters wird dabei die Totzeit reduziert. Mit zunehmender Größe des Partikelfilters wird die Totzeit verlängert.

Bei der Eigenfrequenz-Regelung und der übersteuerten Eigenfrequenz-Regelung wird die Umschaltung des Betriebs der Verbrennungskraftmaschine (zwischen fett und mager) durch die Lambda-Sonden vorgegeben. Demgegenüber erfolgt bei einer sogenannten bilanzierten Lambda-Regelung die Umschaltung mit einer festgelegten und insbesondere konstanten Frequenz. Bevorzugt wird die Verbrennungskraftmaschine dauerhaft mit der bilanzierten Lambda-Regelung betrieben, wobei nur zur Bestimmung des Beladungszustands des Partikelfilters auf die Eigenfrequenz-Regelung umgeschaltet wird.

Insbesondere wird bei der bilanzierten Lambda-Regelung eine nur geringe Anpassung des Sauerstoffgehalts im Abgas vorgenommen. Insbesondere wird der Sauerstoffgehalt im Abgas bei der bilanzierten Lambda-Regelung auf einen Lambda-Wert von über 0,985 und von höchstens 1,005 eingestellt, bevorzugt mindestens 0,990 und höchstens 1,000. Der Unterschied bei der bilanzierten Lambda-Regelung zwischen dem Höchstwert und dem Minimalwert beträgt insbesondere höchstens 0,02, bevorzugt höchstens 0,01. Der Lambda-Wert kann dabei unter Berücksichtigung der Messwerte der Lambda-Sonden eingestellt werden.

Insbesondere wird bei der Eigenfrequenz-Regelung eine wesentlich ausgeprägtere Anpassung des Sauerstoffgehalts im Abgas vorgenommen. Insbesondere wird der Sauerstoffgehalt im Abgas bei der Eigenfrequenz-Regelung auf einen Lambda-Wert von 0,960 bis 0,985 für ein fettes Gemisch und auf einen Lambda-Wert von 1,005 bis 1,020 für ein mageres Gemisch eingestellt. Der Unterschied bei der Eigenfrequenz-Regelung zwischen dem Höchstwert und dem Minimalwert der jeweiligen Lambda-Werte für fettes bzw. mageres Gemisch beträgt insbesondere mindestens 0,02, bevorzugt mindestens 0,025, besonders bevorzugt mindestens 0,03. Bevorzugt ist auch eine noch ausgeprägtere Anpassung des Sauerstoffgehalts im Abgas möglich. Insbesondere wird der Sauerstoffgehalt bei der Eigenfrequenz-Regelung auf einen Lambda-Wert von 0,8 bis 1,2 eingestellt, so dass der Unterschied zwischen dem Höchstwert und dem Minimalwert 0,4 beträgt.

Gemäß einer bevorzugten Ausgestaltung wird in Schritt d) zumindest eine Sauerstoffspeicherfähigkeit des Partikelfilters sowie eine Laufzeit des Abgases von der ersten Lambda-Sonde hin zu der zweiten Lambda-Sonde berücksichtigt. Die Sauerstoffspeicherfähigkeit des Partikelfilters beeinflusst die Menge des aus dem Abgas mit Sauerstoffüberschuss entnommenen Sauerstoffs. Der von dem Partikelfilter eingelagerte Sauerstoff wird also nicht zur Umsetzung der im Partikelfilter eingelagerten Partikel verwendet und ist damit bei der Berechnung des Beladungszustands des Partikelfilters aus der zeitlichen Differenz des ersten Zeitpunkts und des zweiten Zeitpunkts zu berücksichtigen.

Weiterhin ist die (z. B. in Abhängigkeit von dem Betriebspunkt der Verbrennungskraftmaschine variierende) Laufzeit des Abgases von der ersten Lambda-Sonde hin zu der zweiten Lambda-Sonde für die Berechnung des Beladungszustands zu berücksichtigen. Sollte der Partikelfilter z. B. eine nur geringe Beladung mit Partikeln aufweisen, wird das Abgas mit dem Sauerstoffüberschuss ohne wesentliche Umsetzung von im Abgas enthaltenen Sauerstoff durch den Partikelfilter hindurchströmen. Die zeitliche Differenz zwischen dem ersten Zeitpunkt und dem zweiten Zeitpunkt wird dann im Wesentlichen nur von der Strömungsgeschwindigkeit des Abgases (abhängig vom Betriebspunkt der Verbrennungskraftmaschine) abhängen. Dabei kann die zeitliche Differenz auch durch die Sauerstoffspeicherfähigkeit des Partikelfilters beeinflusst werden.

Jede Anordnung und Ausgestaltung von Lambda-Sonden kann hierfür Verwendung finden. Es sind zwei unterschiedliche Typen von Lambda-Sonden bekannt. Zum einen die Breitbandlambda-Sonde, die ein dem Sauerstoffgehalt des Abgases proportionales Messsignal erzeugt. Zum anderen die sogenannte Zweipunktlambda-Sonde (oder auch Sprung-Sonde), bei der als Messsignal nur zwei sehr unterschiedliche Werte erzeugt werden. Die Zweipunktlambda-Sonde kann also nur die Umschaltung zwischen dem Betrieb mit Sauerstoffüberschuss und dem Betrieb mit Sauerstoffmangel anzeigen, während die Breitbandlambda-Sonde den jeweils vorliegenden Anteil an Sauerstoff im Abgas anzeigen kann.

Erfindungsgemäss wird in Schritt b) eine erste Lambda-Sonde nach Art einer Breitbandlambda-Sonde und in Schritt c) eine zweite Lambda-Sonde nach Art einer Zweipunktlambda-Sonde eingesetzt. Mit einer Zweipunktlambda-Sonde als zweite Lambda-Sonde kann der zweite Zeitpunkt des Durchbruchs des Abgases mit Sauerstoffüberschuss durch den Partikelfilter erfasst und angezeigt werden. Eine genauere Anzeige des konkreten Anteils an Sauerstoff im Abgas ist insbesondere nicht erforderlich. Die Beladung des Partikelfilters mit Partikeln wird ausschließlich über die zeitliche Differenz zwischen dem ersten Zeitpunkt und dem zweiten Zeitpunkt bestimmt.

Das Verfahren eignet sich besonders bei einem Partikelfilter, der keine katalytisch wirksame Beschichtung aufweist. Insbesondere weist der Partikelfilter also keine zusätzliche Beschichtung auf, die für eine katalytische Umsetzung von im Abgas enthaltenen Schadstoffen vorgesehen ist. Eine solche katalytische Beschichtung ist bekanntermaßen Alterungserscheinungen unterworfen, so dass die Umsetzung von Partikeln durch den im Abgas bereitgestellten Sauerstoffüberschuss unterschiedlich beeinflusst werden kann. Ein nicht katalytisch beschichteter Partikelfilter ist diesen Alterungserscheinungen nicht unterworfen, so dass die in Schritt d) erfolgende Berechnung genauer durchgeführt werden kann.

Bevorzugt findet das Verfahren Anwendung, wenn der Partikelfilter (bzw. dessen stromaufwärtige Stirnseite) in einem Abstand entlang einer (idealisierten) Strömungslinie durch die Abgasleitung von höchstens 80 Zentimetern von (einem Auslass) einer Brennkammer der Verbrennungskraftmaschine angeordnet ist. Die Strömungslinie verläuft insbesondere entlang einer Mittellinie der Abgasleitung (verläuft also durch die Flächenmittelpunkte der Querschnitte der Abgasleitung). Eine solche motornahe Anordnung des Partikelfilters ermöglicht einen verbesserten Betrieb der Verbrennungskraftmaschine bei der Eigenfrequenz-Regelung der Lambda-Sonden, bei der eine Umschaltung zwischen dem Betrieb mit Sauerstoffüberschuss und dem Betrieb mit Sauerstoffmangel durch das Erkennen der sich ändernden Zusammensetzung des Abgases durch die zweite Lambda-Sonde erfolgt. Infolge des kurzen Abstands des Partikelfilters von der Verbrennungskraftmaschine kann eine schnellere Umschaltung zwischen den oben genannten Betriebsarten (fett/mager) erfolgen.

Das vorgeschlagene Verfahren ermöglicht die Erkennung eines Beladungszustands eines in der Abgasleitung angeordneten Partikelfilters. Insbesondere kann so auch die Wirksamkeit einer durchgeführten Regeneration des Partikelfilters überprüft werden.

Weiterhin wird eine Abgasanlage eines Kraftfahrzeuges vorgeschlagen, zumindest aufweisend zumindest eine Abgasleitung, einen in der Abgasleitung angeordneten Partikelfilter, eine stromaufwärts des Partikelfilters (in der Abgasleitung) angeordnete erste Lambda-Sonde und eine stromabwärts des Partikelfilters (in der Abgasleitung) angeordnete zweite Lambda-Sonde sowie eine Steuereinheit zur Erfassung von (eingestellten bzw. erwarteten) Messsignalen der ersten Lambda-Sonde und der (zugehörigen bzw. daraus resultierenden / ebenfalls erwarteten) zweiten Lambda-Sonde. Durch die Steuereinheit ist eine zeitliche Differenz zwischen einem ersten Messsignal der ersten Lambda-Sonde und einem zweiten Messsignal der zweiten Lambda-Sonde erfassbar und auswertbar. Hierfür kann die Steuereinheit mit entsprechend angepassten Signalanschlüssen und Rechenleistung eingerichtet sein. Die Steuereinheit kann auch Teil einer übergeordneten Baueinheit sein, wie z. B. eines Motormanagement-Systems.

Die Steuereinheit der Abgasanlage ist insbesondere zur Durchführung des vorgeschlagenen Verfahrens vorgesehen und eingerichtet. Dabei wird durch die Steuereinheit insbesondere erfasst, zu welchen Zeitpunkten ein in die Abgasleitung eingeleitetes Abgas mit Sauerstoffüberschuss die Lambda-Sonden erreicht. Die erfasste zeitliche Differenz zwischen diesen Zeitpunkten wird insbesondere zur Bestimmung eines Beladungszustands des Partikelfilters herangezogen. Eine kurze zeitliche Differenz deutet daraufhin, dass eine nur geringe Beladung des Partikelfilters vorliegt. Eine größere zeitliche Differenz deutet auf eine stärkere Beladung des Partikelfilters hin.

Erfindungsgemäss ist die erste Lambda-Sonde eine Breitbandlambda-Sonde und die zweite Lambda-Sonde eine Zweipunktlambda-Sonde. Insbesondere weist der Partikelfilter keine katalytisch wirksame Beschichtung auf.

Bevorzugt ist der Partikelfilter (bzw. dessen stromaufwärtige Stirnseite) in einem Abstand entlang einer Strömungslinie durch die Abgasleitung von höchstens 80 Zentimetern von (einem Auslass) einer Brennkammer einer Verbrennungskraftmaschine angeordnet. Die Strömungslinie verläuft insbesondere entlang einer Mittellinie der Abgasleitung (verläuft also durch die Flächenmittelpunkte der Querschnitte der Abgasleitung).

Es wird weiter ein Kraftfahrzeug vorgeschlagen, zumindest aufweisend eine Verbrennungskraftmaschine mit einer Abgasanlage, wobei die Abgasanlage zumindest eine Abgasleitung, einen in der Abgasleitung angeordneten Partikelfilter, eine stromaufwärts des Partikelfilters (in der Abgasleitung) angeordnete erste Lambda-Sonde sowie eine stromabwärts des Partikelfilters (in der Abgasleitung) angeordnete zweite Lambda-Sonde sowie eine Steuereinheit zur Erfassung von Messsignalen der ersten Lambda-Sonde und der zweiten Lambda-Sonde aufweist. Durch die Steuereinheit ist eine zeitliche Differenz zwischen einem ersten Messsignal der ersten Lambda-Sonde und einem zweiten Messsignal der zweiten Lambda-Sonde erfassbar und auswertbar. Die Steuereinheit der Abgasanlage ist insbesondere zur Durchführung des vorgeschlagenen Verfahrens vorgesehen und einge-richtet.

Die Ausführungen zu dem vorgeschlagenen Verfahren sind auf die vorgeschlagene Abgasanlage und/oder das Kraftfahrzeug übertragbar und umgekehrt.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Fig. 1: ein Kraftfahrzeug;
Fig. 2: ein Lambda-Wert/Zeit-Diagramm; und
Fig. 3: den Ablauf des Verfahrens in einem Lambda-Wert/Zeit-Diagramm.

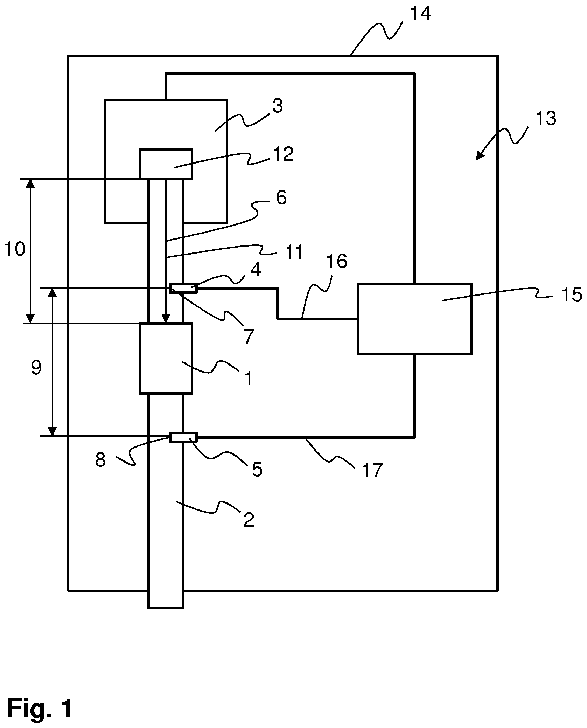

Die Figur 1 zeigt ein Kraftfahrzeug 14, das eine Verbrennungskraftmaschine 3 mit einer Abgasanlage 13 umfasst, wobei die Abgasanlage 13 eine Abgasleitung 2, einen in der Abgasleitung 2 angeordneten Partikelfilter 1, eine stromaufwärts des Partikelfilters 1 (in der Abgasleitung 2) angeordnete erste Lambda-Sonde 4 sowie eine stromabwärts des Partikelfilters 1 (in der Abgasleitung 2) angeordnete zweite Lambda-Sonde 5 sowie eine Steuereinheit 15 zur Erfassung von ersten Messsignalen 16 der ersten Lambda-Sonde 4 und von zweiten Messsignalen 17 der zweiten Lambda-Sonde 5 aufweist. Durch die Steuereinheit 15 wird eine zeitliche Differenz 9 zwischen einem ersten Messsignal 16 der ersten Lambda-Sonde 4 und einem zweiten Messsignal 17 der zweiten Lambda-Sonde 5 erfasst und ausgewertet. So kann z. B. ein Sauerstoffüberschuss eines in die Abgasleitung 2 eingeleiteten Abgases 6 durch die erste Lambda-Sonde 4 an einem ersten Zeitpunkt 7 und durch die zweite Lambda-Sonde 5 an einem zweiten Zeitpunkt 8 erkannt werden.

Der Partikelfilter 1 (bzw. dessen stromaufwärtige Stirnseite) ist in einem Abstand 10 entlang einer (idealisierten) Strömungslinie 11 durch die Abgasleitung 2 von (einem Auslass) einer Brennkammer 12 der Verbrennungskraftmaschine 3 angeordnet. Die Strömungslinie 11 verläuft entlang einer Mittellinie der Abgasleitung 2 (und verläuft also durch die Flächenmittelpunkte der Querschnitte der Abgasleitung 2).

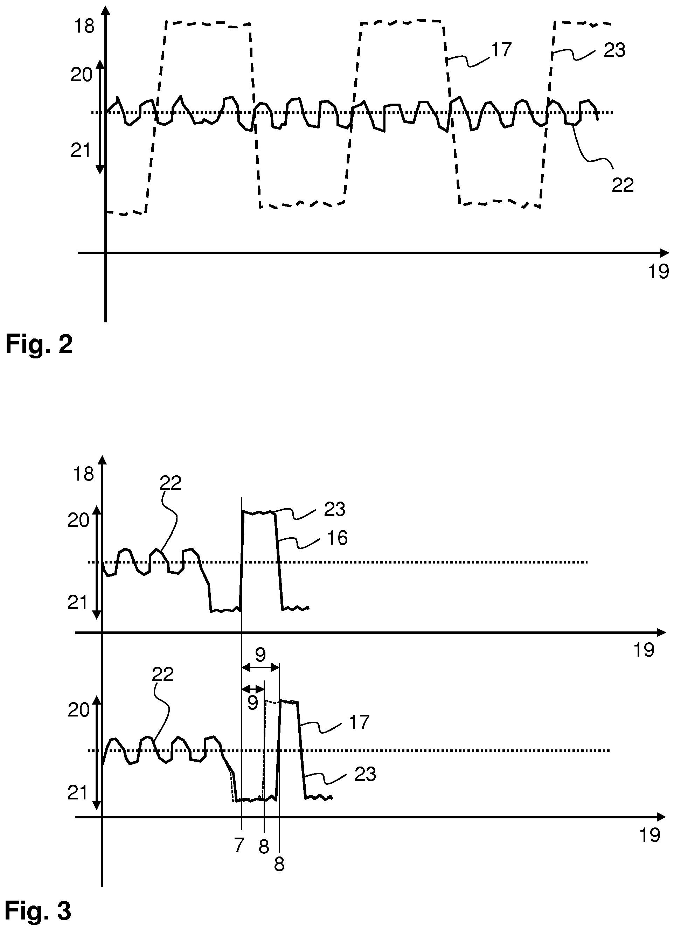

Fig. 2 zeigt ein Lambda-Wert/Zeit-Diagramm. Auf der vertikalen Achse ist der Lambda-Wert 18 aufgetragen, wobei die horizontal verlaufende, gepunktete Linie den Lambda-Wert 1,00 verdeutlicht. Oberhalb dieser Linie liegen überstöchiometrische Lambda-Werte 20 vor, unterhalb dieser Linie unterstöchiometrische Lambda-Werte 21. Auf der horizontalen Achse ist die Zeit 19 aufgetragen.

Hier werden die unterschiedlichen Regelungen für die Umschaltung des Betriebs der Verbrennungskraftmaschine 3 verdeutlicht. Die gestrichelte Linie stellt den Verlauf der zweiten Messsignale 17 der zweiten Lambda-Sonde 5 dar. Während der Durchführung der Schritte a), b) und c) wird der Betrieb der Verbrennungskraftmaschine 3 durch eine Eigenfrequenz-Regelung 23 der Lambda-Sonden 4, 5 geregelt, in dem eine Umschaltung zwischen dem Betrieb mit Sauerstoffüberschuss (überstöchiometrischer Lambda-Wert 20) und einem Betrieb mit Sauerstoffmangel (unterstöchiometrischer Lambda-Wert 21) durch das Erkennen der sich ändernden Zusammensetzung des Abgases 6 durch die zweite Lambda-Sonde 5 erfolgt.

Bei der Eigenfrequenz-Regelung 23 wird die Umschaltung des Betriebs der Verbrennungskraftmaschine 3 durch die Lambda-Sonden 4, 5 vorgegeben. Demgegenüber erfolgt bei einer sogenannten bilanzierten Lambda-Regelung 22, hier mit der durchgezogenen Linie dargestellt, die Umschaltung mit einer festgelegten und konstanten Frequenz.

Bei der bilanzierten Lambda-Regelung 22 wird eine nur geringe Anpassung des Sauerstoffgehalts im Abgas 6 vorgenommen. Bei der Eigenfrequenz-Regelung 23 wird eine wesentlich ausgeprägtere Anpassung des Sauerstoffgehalts im Abgas 6 vorgenommen.

Fig. 3 zeigt den Ablauf des Verfahrens in einem Lambda-Wert/Zeit-Diagramm. Auf der vertikalen Achse ist der Lambda-Wert 18 aufgetragen, wobei die horizontal verlaufende, gepunktete Linie den Lambda-Wert 1,00 verdeutlicht. Oberhalb dieser Linie liegen überstöchiometrische Lambda-Werte 20 vor, unterhalb dieser Linie unterstöchiometrische Lambda-Werte 21. Auf der horizontalen Achse ist die Zeit 19 aufgetragen. Im oberen Diagramm ist der Verlauf der ersten Messsignale 16 der ersten Lambda-Sonde 4 dargestellt. Im unteren Diagramm ist der Verlauf der zweiten Messsignale 17 der zweiten Lambda-Sonde 5 dargestellt.

Das Verfahren startet, indem von der bilanzierten Lambda-Regelung 22 auf die Eigenfrequenz-Regelung 23 umgeschaltet wird. Dabei wird zunächst ein fettes Gemisch (unterstöchiometrischer Lambda-Wert 21) als Abgas 6 in die Abgasleitung 2 eingeleitet. Nach der Umschaltung auf ein mageres Gemisch (überstöchiometrischer Lambda-Wert 20) registriert die erste Lambda-Sonde 4 zum ersten Zeitpunkt 7 das Abgas 6 mit dem Sauerstoffüberschuss. In Schritt a) wird also ein Abgas 6 mit einem Sauerstoffüberschuss in die Abgasleitung 2 stromaufwärts der ersten Lambda-Sonde 4 eingeleitet, wobei in dem Partikelfilter 1 eine Temperatur von mindestens 500 Grad Celsius vorliegt. In Schritt b) wird der Sauerstoffüberschuss im Abgas 6 durch die erste Lambda-Sonde 4 an einem ersten Zeitpunkt 7 erkannt. In Schritt c) wird der Sauerstoffüberschuss durch die zweite Lambda-Sonde 5 an einem zweiten Zeitpunkt 8 erkannt. In Schritt d) wird der Beladungszustand des Partikelfilters 1 aus einer zeitlichen Differenz 9 des ersten Zeitpunkts 7 und des zweiten Zeitpunkts 8 berechnet.

Dabei zeigt in dem unteren Diagramm die gestrichelt ausgeführte Linie der Eigenfrequenz-Regelung 23 den Verlauf der zweiten Messsignale 17 der zweiten Lambda-Sonde 5, wenn der Partikelfilter 1 eine nur geringe Beladung mit Partikeln aufweist. Die durchgezogen ausgeführte Linie der Eigenfrequenz-Regelung 23 zeigt den Verlauf der zweiten Messsignale 17 der zweiten Lambda-Sonde 5, wenn der Partikelfilter 1 eine hohe Beladung mit Partikeln aufweist. Dabei ist erkennbar, dass, wenn eine geringe Beladung des Partikelfilters 1 vorliegt, die zeitliche Differenz 9 klein ist und wenn eine hohe Beladung des Partikelfilters 1 vorliegt, die zeitliche Differenz 9 groß ist.

Das Abgas 6 mit dem Sauerstoffüberschuss tritt stromabwärts der ersten Lambda-Sonde 4 in den Partikelfilter 1 ein, wobei innerhalb des Partikelfilters 1 eine oxidative Umsetzung der eingelagerten Partikel erfolgt. Infolge der oxidativen Umsetzung wird die Menge des im Abgas 6 enthaltenen, überschüssigen Sauerstoffs reduziert. Erst wenn die in dem Partikelfilter 1 eingelagerten Partikel oxidativ umgesetzt wurden, wird Abgas 6 mit Sauerstoffüberschuss auch stromabwärts des Partikelfilters 1 auftreten. Erst dann wird der im Abgas 6 eingestellte Sauerstoffüberschuss durch die zweite Lambda-Sonde 5 erkannt (Schritt c)).

Stromabwärts des Partikelfilters 1 tritt also das in die Abgasleitung 2 eingeleitete Abgas 6 mit dem Sauerstoffüberschuss erst zeitverzögert auf Die Verzögerung hängt einerseits von der Menge des in den Partikelfilter 1 einströmenden Sauerstoffüberschusses und andererseits von dem Beladungszustand des Partikelfilters 1 ab. Der eingestellte Sauerstoffüberschuss ist bekannt (z. B. aus der Steuereinheit 15, über die die Einstellung des Gemisches aus Kraftstoff und Luft zur Zuführung in die Brennkammern 12 der Verbrennungskraftmaschine 3 erfolgt), so dass aus der Verzögerung des Auftretens von Abgas 6 mit Sauerstoffüberschuss an der zweiten Lambda-Sonde 5 der Beladungszustand des Partikelfilters 1 errechnet werden kann.

Weiter wird in Schritt d) die Sauerstoffspeicherfähigkeit des Partikelfilters 1 sowie die Laufzeit des Abgases 6 von der ersten Lambda-Sonde 4 hin zu der zweiten Lambda-Sonde 5 berücksichtigt. Weist der Partikelfilter 1 eine nur geringe Beladung mit Partikeln auf, strömt das Abgas 6 mit dem Sauerstoffüberschuss ohne wesentliche Umsetzung von im Abgas 6 enthaltenen Sauerstoff durch den Partikelfilter 1 hindurch. Die zeitliche Differenz 9 zwischen dem ersten Zeitpunkt 7 und dem zweiten Zeitpunkt 8 hängt dann im Wesentlichen nur von der Strömungsgeschwindigkeit des Abgases 6 (abhängig vom Betriebspunkt der Verbrennungskraftmaschine 3) ab. Dabei kann die zeitliche Differenz 9 auch durch die Sauerstoffspeicherfähigkeit des Partikelfilters 1 beeinflusst werden.

### BEZUGSZEICHENLISTE

- 1: Partikelfilter
- 2: Abgasleitung
- 3: Verbrennungskraftmaschine
- 4: erste Lambda-Sonde
- 5: zweite Lambda-Sonde
- 6: Abgas
- 7: erster Zeitpunkt
- 8: zweiter Zeitpunkt
- 9: zeitliche Differenz
- 10: Abstand
- 11: Strömungslinie
- 12: Brennkammer
- 13: Abgasanlage
- 14: Kraftfahrzeug
- 15: Steuereinheit
- 16: erstes Messsignal
- 17: zweites Messsignal
- 18: Lambda-Wert
- 19: Zeit
- 20: überstöchiometrischer Lambda-Wert (Lambda-Wert >1; Abgas mit Sauerstoffüberschuss)
- 21: unterstöchiometrischer Lambda-Wert (Lambda-Wert <1; Abgas mit Sauerstoffmangel)
- 22: bilanzierte Lambda-Regelung
- 23: Eigenfrequenz-Regelung

## Patentansprüche

1. Verfahren zur Prüfung eines Beladungszustands eines Partikelfilters (1) in einer Abgasleitung (2) einer Verbrennungskraftmaschine (3), wobei die Abgasleitung (2) zumindest den Partikelfilter (1), eine stromaufwärts des Partikelfilters (1) angeordnete erste Lambda-Sonde (4) sowie eine stromabwärts des Partikelfilters (1) angeordnete zweite Lambda-Sonde (5) aufweist; wobei das Verfahren zumindest die folgenden Schritte umfasst:
a) Einleiten eines Abgases (6) mit einem Sauerstoffüberschuss in die Abgasleitung (2) stromaufwärts der ersten Lambda-Sonde (4), wobei in dem Partikelfilter (1) eine Temperatur von mindestens 500 Grad Celsius vorliegt;
b) Erkennen des Sauerstoffüberschusses durch die erste Lambda-Sonde (4) an einem ersten Zeitpunkt (7);
c) Erkennen des Sauerstoffüberschusses durch die zweite Lambda-Sonde (5) an einem zweiten Zeitpunkt (8);
d) Bestimmen eines Beladungszustands des Partikelfilters (1) aus einer zeitlichen Differenz (9) des ersten Zeitpunkts (7) und des zweiten Zeitpunkts (8);
wobei in Schritt b) eine erste Lambda-Sonde (4) nach Art einer Breitbandlambda-Sonde und in Schritt c) eine zweite Lambda-Sonde (5) nach Art einer Zweipunktlambda-Sonde eingesetzt wird.

2. Verfahren nach Patentanspruch 1, wobei zumindest während der Durchführung der Schritte a), b) und c) der Betrieb der Verbrennungskraftmaschine (3) durch eine Eigenfrequenz-Regelung der Lambda-Sonden (4, 5) geregelt wird, in dem eine Umschaltung zwischen dem Betrieb mit Sauerstoffüberschuss und einem Betrieb mit Sauerstoffmangel durch das Erkennen der sich ändernden Zusammensetzung des Abgases (6) durch die zweite Lambda-Sonde (5) erfolgt.

3. Verfahren nach Patentanspruch 2, wobei der Sauerstoffgehalt im Abgas bei der Eigenfrequenz-Regelung auf einen Lambda-Wert von 0,960 bis 0,985 für ein fettes Gemisch und auf einen Lambda-Wert von 1,005 bis 1,020 für ein mageres Gemisch eingestellt wird.

4. Verfahren nach Patentanspruch 3, wobei ein Unterschied zwischen dem Höchstwert und dem Minimalwert der jeweiligen Lambda-Werte mindestens 0,02 beträgt.

5. Verfahren nach einem der vorhergehenden Patentansprüche, wobei in Schritt d) zumindest eine Sauerstoffspeicherfähigkeit des Partikelfilters (1) sowie eine Laufzeit des Abgases (6) von der ersten Lambda-Sonde (4) hin zu der zweiten Lambda-Sonde (5) berücksichtigt wird.

6. Abgasanlage (13) einer Verbrennungskraftmaschine (3) eines Kraftfahrzeuges (14), zumindest aufweisend zumindest eine Abgasleitung (2), einen in der Abgasleitung (2) angeordneten Partikelfilter (1), eine stromaufwärts des Partikelfilters (1) angeordnete erste Lambda-Sonde (4) und eine stromabwärts des Partikelfilters (1) angeordnete zweite Lambda-Sonde (5) sowie eine Steuereinheit (15) zur Erfassung von Messsignalen (16, 17) der ersten Lambda-Sonde (4) und der zweiten Lambda-Sonde (5); wobei die Steuereinheit (15) eingerichtet ist zur Durchführung des Verfahrens nach einem der vorhergehenden Patentansprüche 1 bis 5 und eine zeitliche Differenz (9) zwischen einem erwarteten ersten Messsignal (16) der ersten Lambda-Sonde (4) und einem zugehörigen zweiten Messsignal (17) der zweiten Lambda-Sonde (5) zu erfassen und auszuwerten; wobei die erste Lambda-Sonde (4) eine Breitbandlambda-Sonde und die zweite Lambda-Sonde (5) eine Zweipunktlambda-Sonde ist.

7. Abgasanlage (13) nach Patentanspruch 6, wobei der Partikelfilter (1) keine katalytisch wirksame Beschichtung aufweist.

8. Abgasanlage (13) nach einem der Patentansprüche 6 bis 7, wobei der Partikelfilter (1) in einem Abstand (10) entlang einer Strömungslinie (11) durch die Abgasleitung (2) von höchstens 80 Zentimetern von einer Brennkammer (12) der Verbrennungskraftmaschine (3) angeordnet ist.

## Claims

1. The invention relates to a method for testing a loading state of a particulate filter (1) in an exhaust gas line (2) of an internal combustion engine (3), wherein the exhaust gas line (2) comprises at least the particulate filter (1), a first lambda probe (4) arranged upstream of the particulate filter (1) and a second lambda probe (5) arranged downstream of the particulate filter (1); wherein the method comprises at least the following steps:
a) injecting an exhaust gas (6) with an oxygen excess into the exhaust gas line (2) upstream of the first lambda probe (4), where a temperature of at least 500° Celsius is present in the particulate filter (1);
b) detecting the oxygen level through the first lambda probe (4) at a first point in time (7);
c) detecting the oxygen excess through the second lambda probe (5) at a second point in time (8);
d) determining a loading state of the particulate filter (1) from a temporal difference (9) of the first point in time (7) and the second point in time (8);
wherein in step b) a first lambda probe (4) is used in the manner of a broad band lambda probe and in step c) a second lambda probe (5) is used in the manner of a two-point lambda probe.

2. Method according to claim 1, wherein at least during the performance of the steps a), b) and c) the operation of the internal combustion engine (3) is regulated by a natural frequency regulation of the lambda probes (4, 5) in which a switchover between the operation with excess oxygen and an operation with lack of oxygen is effected by the excitation of the changing composition of the exhaust gas (6) by the second lambda probe (5).

3. Method according to claim 2, wherein the oxygen content in the exhaust gas at the natural frequency regulation is set to a lambda value of 0.960 to 0.985 for a rich mixture and to a lambda value of 1.005 to 1.020 for a lean mixture.

4. Method according to claim 3, wherein a difference between the maximum value and the minimum value of the respective lambda values is at least 0.02.

5. Method according to one of the preceding claims, wherein in step d) at least one oxygen storage capacity of the particulate filter (1) and a running time of the exhaust gas (6) from the first lambda probe (4) to the second lambda probe (5) are taken into account.

6. Exhaust system (13) of a combustion engine (3) of a vehicle (14), at least comprising at least one exhaust line (2), a particulate filter (1) arranged in the exhaust line (2), a first lambda probe (4) arranged upstream of the particulate filter (1) and a second lambda probe (5) arranged downstream of the particulate filter (1), as well as a control unit (15) to capture measuring signals (16, 17) from the first lambda probe (4) and the second lambda probe (5); wherein the control unit (15) is configured to conduct the method according to one of the preceding claims 1 to 5 and to detect and evaluate a time difference (9) between an expected first measurement signal (16) of the first lambda probe (4) and an associated second measurement signal (17) of the second lambda probe (5); wherein the first lambda probe (4) is a broadband lambda probe and the second lambda probe (5) is a two-point lambda probe.

7. Exhaust system (13) according to claim 6, wherein the particulate filter (1) has no catalytically active coating.

8. Exhaust system (13) according to one of the claims 6 to 7, wherein the particulate filter (1) is arranged at a distance (10) of at most 80 centimeters from a combustion chamber (12) of the internal combustion engine (3) along a flow line (11) through the exhaust line (2).

## Revendications

1. Procédé permettant de contrôler un état de charge d'un filtre à particules (1) dans une conduite de gaz d'échappement (2) d'un moteur à combustion interne (3), la conduite de gaz d'échappement (2) présentant au moins le filtre à particules (1), une première sonde lambda (4) disposée en amont du filtre à particules (1), ainsi qu'une deuxième sonde lambda (5) disposée en aval du filtre à particules (1); le procédé comprenant au moins les étapes suivantes:
a) introduction d'un gaz d'échappement (6) comprenant un excédent d'oxygène dans la conduite de gaz d'échappement (2) en amont de la première sonde lambda (4), le filtre à particules (1) étant à une température d'au moins 500 degrés Celsius;
b) détection de l'excédent d'oxygène par la première sonde lambda (4) à un premier moment (7);
c) détection de l'excédent d'oxygène par la deuxième sonde lambda (5) à un deuxième moment (8);
d) détermination d'un état de charge du filtre à particules (1) à partir d'une différence temporelle (9) du premier moment (7) et du deuxième moment (8);
une première sonde lambda (4) de type sonde lambda à large bande étant utilisée dans l'étape b) et une deuxième sonde lambda (5) de type de sonde lambda à deux points étant utilisée dans l'étape c).

2. Procédé selon la revendication 1, dans lequel, au moins durant l'exécution des étapes a), b) et c), le fonctionnement du moteur à combustion interne (3) est réglé par un réglage de fréquence propre des sondes lambda (4, 5), dans lequel une commutation entre le fonctionnement avec excédent d'oxygène et un fonctionnement avec déficience en oxygène s'effectue par la détection de la composition variable du gaz d'échappement (6) par la deuxième sonde lambda (5).

3. Procédé selon la revendication 2, dans lequel la teneur en oxygène du gaz d'échappement est réglée lors du réglage de fréquence propre à une valeur lambda située entre 0,960 et 0,985 pour un mélange riche et à une valeur lambda située entre 1,005 et 1,020 pour un mélange maigre.

4. Procédé selon la revendication 3, dans lequel une différence entre la valeur maximale et la valeur minimale des valeurs lambda respectives est d'au moins 0,02.

5. Procédé selon l'une quelconque des revendications précédentes, dans lequel dans l'étape d) au moins une capacité de stockage d'oxygène du filtre à particules (1) et une durée de transit du gaz d'échappement (6) de la première sonde lambda (4) à la deuxième sonde lambda (5) sont prises en compte.

6. Système d'échappement (13) d'un moteur à combustion interne (3) d'un véhicule automobile (14) présentant au moins une conduite de gaz d'échappement (2), un filtre à particules (1) disposé dans la conduite de gaz d'échappement (2), une première sonde lambda (4) disposée en amont du filtre à particules (1) et une deuxième sonde lambda (5) disposée en aval du filtre à particules (1), ainsi qu'une unité de commande (15) pour la détection de signaux de mesure (16, 17) de la première sonde lambda (4) et de la deuxième sonde lambda (5); l'unité de commande (15) étant conçue pour l'exécution du procédé selon l'une quelconque des revendications 1 à 5 précédentes et pour la détection et l'évaluation d'une différence temporelle (9) entre un premier signal de mesure (16) de la première sonde lambda (4) et un deuxième signal de mesure (17) correspondant de la deuxième sonde lambda (5); la première sonde lambda (4) étant une sonde lambda à large bande et la deuxième sonde lambda (5) étant une sonde lambda à deux points.

7. Système d'échappement (13) selon la revendication 6, dans lequel le filtre à particules (1) ne présente aucun revêtement catalytiquement efficace.

8. Système d'échappement (13) selon l'une quelconque des revendications 6 à 7, dans lequel le filtre à particules (1) est disposé à une distance (10) le long d'une ligne de flux (11) à travers la conduite de gaz d'échappement (2) d'au maximum 80 centimètres d'une chambre de combustion (12) du moteur à combustion interne (3).
